Europäisches Patentamt

European Patent Office

Office européen des brevets

(11) Numéro de publication: **0 208 584**

**A1**

## (12) DEMANDE DE BREVET EUROPEEN

(21) Numéro de dépôt: 86401339.6

(22) Date de dépôt: 18.06.86

(51) Int. Cl.⁴: **F16B 5/06 , F24H 9/18**

(30) Priorité: 21.06.85 FR 8509503

(43) Date de publication de la demande:
**14.01.87 Bulletin 87/03**

(84) Etats contractants désignés:
**AT CH DE FR GB IT LI SE**

(71) Demandeur: **EGO-FRANCE Société Anonyme
Route de Metz Saulny
F-57140 Woippy (Moselle)(FR)**

(72) Inventeur: **Andre, Jacques
8, rue Goussel François
F-57070 Metz(FR)**

(74) Mandataire: **Chevallier, Robert Marie Georges
Cabinet BOETTCHER 23, rue La Boétie
F-75008 Paris(FR)**

(54) Dispositif de fixation d'un tampon obturant une ouverture d'une paroi.

㊗ Il comprend au moins deux éléments allongés, pliés en épingle avec une première branche (11) transversant le tampon (1) avec une possibilité de rotation dans ce dernier et de coulissement longidutinal sous l'effet d'un écrou (14) et une seconde branche (12) qui s'applique par une face extrême d'appui (17) contre la paroi (6) en dehors de l'ouverture (5) qui est obturée par le tampon (1).

Fig. 2

EP 0 208 584 A1

## Dispositif de fixation d'un tampon obturant une ouverture d'une paroi.

L'invention a pour objet un dispositif de fixation permettant de faire tenir fermement en place un tampon dont le rôle est d'obturer une ouverture de passage réalisée dans une paroi, sans qu il soit nécessaire de prévoir autour de cette ouverture une bride ou un collet ou des goujons de maintien du tampon.

On sait que de nombreux appareils tel que les chauffe-eau électriques à accumulation comprennent un ballon contenant un fluide, le plus souvent de l'eau, dans lesquels plongent des organes fonctionnels de chauffage ou de contrôle comme des tubes métalliques à résistance électrique de chauffage, ou des bulbes thermosensibles de mesure et de contrôle de la température, etc... Le passage de ces organes à l'intérieur du ballon se fait à travers la paroi, généralement métallique, de ce ballon A cet effet, une ouverture, généralement circulaire, est découpée dans la paroi, à un endroit convenable ; à cette ouverture est fixé un tronçon de tubulure qui se termine à son extrémité libre par une bride percée de trous espacés circulairement Selon une variante l'ouverture peut être réalisée avec un collet rabattu vers 1 extérieur du ballon et jouant le rôle d'une bride. Selon une autre variante, l'ouverture n'est pourvue d'aucune tubulure ni d'aucun collet mais des goujons sont fixés, par exemple par soudage, à la paroi du ballon autour de l'ouverture.

Ces divers moyens de fixation ont pour rôle de servir à tenir en place une collerette qui a un diamètre supérieur à celui de l'ouverture et qui fait partie du tampon. Cette collerette incorporée au tampon s'applique contre la bride qui termine le tronçon de tubulure, ou contre le collet rabattu vers l'extérieur, ou contre la paroi autour de l'ouverture, un joint d'étanchéité pouvant être interposé si nécessaire.

L'invention a pour but principal d'apporter un dispositif qui permet de faire tenir un tampon d'obturation d'une ouverture ménagée dans une paroi, principalement sur un chauffe-eau, sans que cette ouverture soit associée à une bride, à un collet ou à des goujons ou des moyens similaires faisant partie de ladite paroi.

On atteint ce but selon l'invention à l'aide d'un dispositif comprenant au moins deux éléments allongés, recourbés chacun en épingle avec deux branches parallèles ; une première branche est destinée à traverser le tampon de manière étanche avec une possibilité de coulissement en sens longitudinal parallèlement à l'axe du tampon et une possibilité de rotation autour de son propre axe longitudinal à l'intérieur du tampon ; cette première branche est munie à son extrémité libre d'un moyen d'entraînement ou d'immobilisation en rotation et d'un moyen apte à exercer un effort de traction sur cette première branche en prenant appui contre le tampon. La seconde branche s'étend en dehors du tampon parallèlement à la première branche et se termine par une face extrême d'appui destinée à être appliquée contre la paroi à proximité de l'ouverture.

Dans les circonstances où le tampon auquel est destiné le dispositif de l'invention pénètre sans jeu ou avec un faible jeu à l'intérieur de l'ouverture, il est possible de prévoir dans la face latérale du tampon un évidement longitudinal dont les dimensions et la situation lui permettent de recevoir la seconde branche de l'élément recourbé, à la suite d'un mouvement de rotation de ce dernier et de la seconde branche autour de la première branche.

Quand le tampon est en matière souple, en élastomère ou en matière plastique souple, ou en une composition convenable, le dispositif de l'invention comprend encore une plaquette de retenue, en matière rigide, percée de trous dans lesquels passe la première branche de deux dispositifs au moins; cette plaquette de retenue est destinée à s'opposer au déplacement transversal de ces premières branches pendant l'utilisation.

Un tampon peut être fixé à sa position à l'intérieur d'une ouverture à l'aide de plusieurs éléments allongés répartis en sens circonférentiel ; le plus souvent, sur un chauffe-eau dont l'ouverture est obturée par un tampon qui a un corps tronconique en matière plastique souple, deux dispositifs suffisent pour le fixer. Ces dispositifs sont disposés en des points diamétralement opposés et la plaquette de retenue est une barrette allongée dans le sens du diamètre.

Pour bien faire comprendre l'invention, on donnera maintenant une description de trois exemples d'utilisation; on se reportera au dessin annexé dans lequel :

-la figure 1 est une vue générale en perspective d'un tampon en matière souple muni d'un dispositif de fixation conforme à l'invention,

-la figure 2 est une vue partielle en coupe selon II-II de la figure 1 du tampon représenté dans une ouverture d'une paroi,

-la figure 3 est une vue en perspective d'un élément allongé recourbé du dispositif de l'invention,

-la figure 4 est une vue de détail à plus grande échelle d'un trou prévu dans le tampon de la figure 2 pour le montage sur ce tampon de l'élément allongé recourbé de la figure 3,

-la figure 5 est une vue partielle en coupe analogue à la figure 2 mais avec un tampon dépourvu de collerette,

-la figure 6 est une vue partielle en coupe analogue à la figure 2, mais avec un tampon métallique obturant une ouverture.

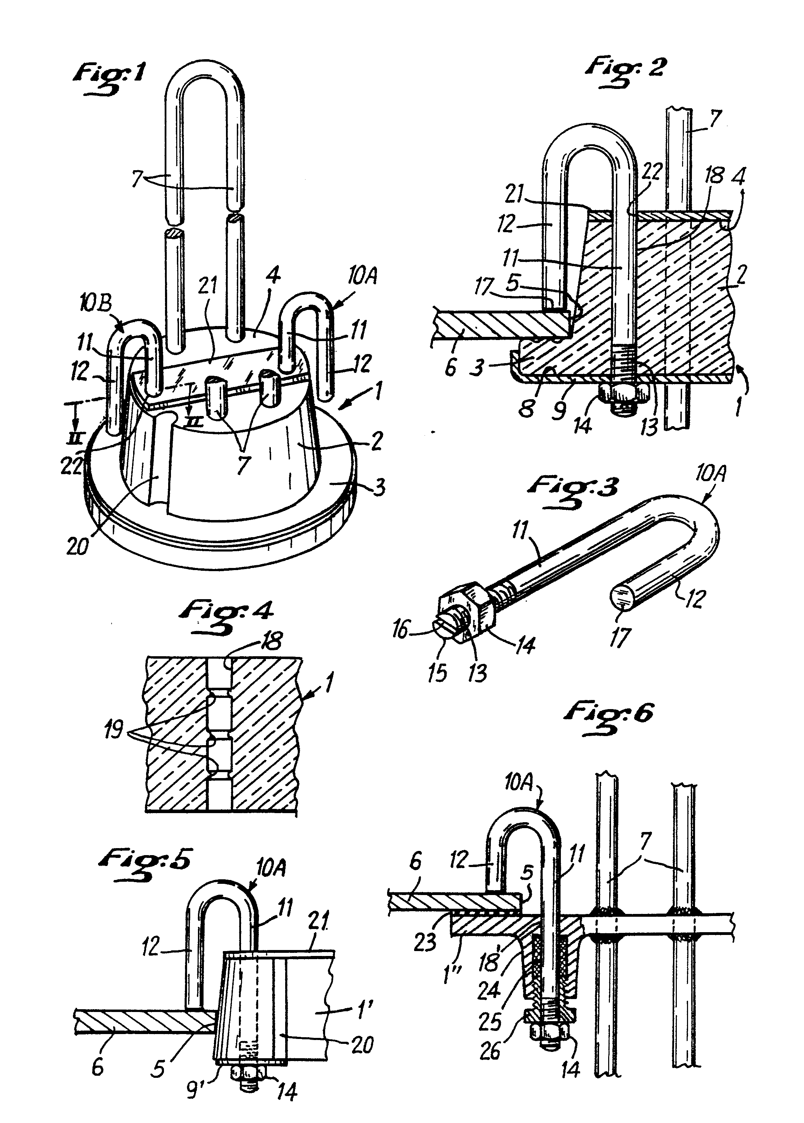

La figure 1 se rapporte à la fixation d'un tampon 1 en matière souple ayant un corps tronconique 2 et une collerette extérieure 3. Celle-ci se trouve à une extrémité du corps tronconique 2 ; l'extrémité opposée se termine par une face extrême 4. Ce tampon est destiné à obturer une ouverture 5 ménagée dans une paroi 6 (figure 2) pour le passage de plusieurs organes fonctionnels comme des tubes de chauffage 7. Ces derniers traversent le tampon 1 par des trous prévus pour les recevoir ayant un diamètre convenable pour produire un serrage suffisant à les tenir à leur position et à assurer l'étanchéité vis-à-vis du fluide contenu par la paroi 6.

Après montage du tampon 1, le corps tronconique 2 passe librement dans l'ouverture 5 et la collerette 3 est appliquée contre la face extérieure de la paroi 6 autour de cette ouverture 5. De préférence, la face extérieure extrême 8 du tampon 1 est couverte d'une plaque métallique rigide 9 qui permet de mieux appliquer la collerette 3 contre la paroi 6.

Avec un tel tampon, le dispositif de l'invention comprend deux éléments allongés 10A, 10B, de préférence à section droite circulaire, recourbés chacun en épingle pour présenter une première branche 11 et une seconde branche 12. Ces deux branches 11, 12 sont espacées l'une de l'autre et sont de préférence parallèles l'une à l'autre.

La première branche 11 a une partie extrême libre terminée par un filetage 12 sur lequel se visse un écrou 14 ; dans la face extrême 15 est creusée une fente diamétrale 16. La seconde branche 12 se termine par une face extrême d'appui 17.

Pendant l'utilisation, la première branche 11 de chaque élément 10A, 10B est introduite dans un trou 18 prévu à travers le tampon 1 entre ses faces extrêmes opposées 4,8. La branche 11 est cylindrique avec un diamètre choisi par rapport à celui du trou 18 pour que la matière souple qui constitue le tampon 1 serre de manière étanche la branche 11 ; de préférence il existe dans le trou 18 plusieurs bourrelets internes 19, saillants intérieurement dans des plans transversaux, qui facilitent le coulissement de la branche 11. Bien qu'elle soit serrée de manière étanche vis à vis du liquide contenu par la paroi 6, chaque branche 11 reste libre de coulisser et de tourner à l'intérieur du trou 18 quand on lui impose une force suffisante.

Les deux branches 11,12 sont parallèles et espacées d'une distance telle que, quand le tampon 1 est mis en place dans une ouverture 5, la seconde branche 12 peut venir s'appuyer par sa face extrême d'appui 17 contre la face inté rieure de la paroi 6, à proximité de l'ouverture 5 (figure 2).

Il existe entre l'ouverture 5 et le corps tronconique 2 du tampon 1 un intervalle assez faible ; pour que chaque seconde branche 12 ne soit pas un obstacle à la mise en place du tampon 1 dans l'ouverture 5, il est prévu dans la face latérale du tampon un évidement longitudinal 20. Cet évidement 20 a une position et des dimensions qui lui permettent de recevoir et de contenir la seconde branche 12 correspondante, par suite d'un mouvement de rotation imposé à la première branche 11 autour de son axe longitudinal à l'intérieur du trou 18. Pendant cette rotation, la seconde branche 12 tourne autour de la première branche 11.

Les deux éléments 10A, 10B sont disposés sur le tampon 1 à des endroits diamétralement opposés ; en outre, une barrette rigide 21 disposée aussi diamétralement est appliquée contre la face extrême intérieure plane 4 du tampon 1. Dans cette barrette 21 sont percés deux trous 22 qui laissent passer chacun, avec un faible jeu, la première branche 11 de chaque dispositif 10A, 10B.

On met le tampon 1 a sa place dans une ouverture 5 alors que les premières branches 11 des dispositifs 10A, 10B ont été introduites dans les trous 18 correspondants et que les secondes branches 12 ont été escamotées dans les évidements 20. Ensuite, en utilisant la fente 16 comme un moyen entraînement en rotation, on fait tourner chaque première branche 11 dans son trou 18 jusqu'à mettre la face extrême 17 de chaque seconde branche 12 en face de la paroi 6 en dehors de l'ouverture 5. En vissant l'écrou 14 qui vient s'appuyer contre la plaque rigide 9 on l'utilise comme un moyen de traction qui tire la première branche 11 ; il en résulte que la face extrême 17 de la seconde branche 12 vient s'appliquer fermement contre la paroi 6 et que la collerette 3 est écrasée entre cette paroi 6 et la plaque rigide 9. Pendans le vissage de l'écrou 14, on immobilise en rotation la première branche 11 à l'aide de la fente 16.

Etant donné que la face d'appui 17 et l'écrou 14 donnent naissance à des forces qui ne sont pas en prolongement, chaque élément 10A,10B est soumis à un couple de basculement dont le résultat serait une déformation du tampon 1 en matière souple. Cette déformation pourrait se traduire à son tour par une perte de l'étanchéité par les trous traversés par les premières branches 11. Le rôle de la barrette rigide 21 est d'empêcher le basculement des branches 11.

La figure 5 montre que le dispositif de l'invention est utilisable avec un tampon 1' tronconique dépourvu de collerette 3. L'étanchéité résulte du coincement du tampon 1' dans l'ouverture 5 sous l'effet de la force d'enfoncement produite par le vissage des écrous 14. Ces derniers peuvent s'appuyer chacun contre une large rondelle individuelle 9'. Un tel tampon 1' a également des évidements latéraux 20 qui servent à l'escamotage des secondes branches 12. Quand un tampon 1 ou 1' a un diamètre important, on peut employer plusieurs éléments 10A, 10B répartis circonférentiellement ; dans ce cas, la barrette 21 peut être remplacée par une plaquette cylindrique ou par une étoile ayant autant de pointes qu'il existe de premières branches 11.

La figure 6 montre que le dispositif de l'invention est utilisable avec un tampon métallique 1", analogue à une bride pleine, qui ne pénètre pas à l'intérieur de l'ouverture 5 mais qui s'applique autour de celle-ci contre la face extérieure de la paroi 6 de préférence avec interposition d'un joint d'étanchéité 23.

Avec un tampon de ce genre, les tubes de chauffage 7 ou d'autres organes sont fixés solidement, par exemple par soudure, ou par un moyen analogue, au tampon 1". Ce dernier possède sur sa face extérieure autant de bossages 24 que de dispositifs 10A,10b. Chaque bossage 24 est creux et utilisable comme un presse-étoupe permettant de rendre étanche le trou 18' de traversée de chaque branche 11 sans empêcher le coulissement et la rotation de celle-ci comme expliqué plus haut. Chaque presse-étoupe comprend une garniture d'étanchéité 25 susceptible d'être comprimée à l'intérieur du bossage creux 24, autour de la branche 11, sous l'effet d'une douille creuse 26 filetée extérieurement; l'écrou 14 peut s'appuyer contre cette douille 26. Il est possible de remplacer le filetage et l'écrou 14 de chaque dispositif par un autre moyen équivalent, une came tournante par exemple, apte à exercer une force de traction sur la branche 11 correspondante.

Quand on réalise le moyen d'entraînement ou d'immobilisation en rotation, il est avantageux de l'orienter de façon qu'il indique, par sa position, la position qu'occupe le plan contenant les deux branches 11, 12. Sur la figure 3 on voit que la fente 16 est contenue dans ce plan. Ainsi on peut contrôler de l'extérieur que la deuxième branche 12 est mise à une position convenable pour être appliquée contre la paroi 6.

L'emploi d'un évidement 20 dans la face latérale du tampon 1 n'est pas obligatoire; on peut ne pas prévoir un tel évidement à condition de donner à la première branche 11 une surlongueur suffisamment importante pour que l'on puisse pousser cette première branche 11 à travers le tampon 1 vers l'intérieur jusqu'à ce que la deuxième branche 12 échappe au tampon 1 et puisse venir s'escamoter, par rotation, au-dessus de la face extrême 4 de ce tampon, dans le prolongement de ce dernier.

**Revendications**

1. Dispositif de fixation d'un tampon (1,1',1") obturant une ouverture (5) ménagée dans une paroi (6) contenant un fluide sous pression, ce tampon pouvant être traversé de manière étanche par divers organes fonctionnels (7), caractérisé en ce qu'il comprend au moins deux éléments allongés (10A,10B), recourbés chacun en épingle avec deux branches espacées dans lesquelles une première branche (11) est destiné à traverser ledit tampon (1,1',1") de manière étanche avec une possibilité de coulissement en sens longitudinal et de rotation autour de son propre axe longitudinal, cette première branche (11) étant munie à son extrémité libre d'un moyen (16) d'entraînement ou d'immobilisation en rotation et d'un moyen (13,14) apte à exercer un effort de traction sur cette première branche (11) en prenant appui contre le tampon, cependant que la deuxième branche (12) est espacée de la première branche (11) et terminée par une face extrême d'appui (17) destinée à s'appliquer contre la face intérieure de la paroi (6) à proximité de l'ouverture (5).

2. Dispositif selon la revendication 1 pour tampon (1,1') en matière souple ayant après montage une face extrême interne (4), caractérisé en ce qu'il comprend une plaquette rigide (21) destinée à être disposée du côté de cette face extrême interne (4) du tampon et dans laquelle sont percés des trous (22) qui sont traversés avec un faible jeu par les premières branches (11).

3. Dispositif selon la revendication 1 caractérisé en ce que le moyen (16) d'entraînement ou d'immobilisation en rotation de la première branche (11) est une fente faite dans la face extrême (15) de cette branche.

4. Dispositif selon la revendication 1 caractérisé en ce que le moyen (13,14) pour exercer un effort de traction sur la première branche (11) comprend un filetage et un écrou.

5. Dispositif selon la revendication 1 pour tampon en matière souple percé de trous (18) pour le passage des premières branches (11), caractérisé en ce que la grosseur de ces branches (11) est choisie par rapport à celle desdits trous (18) pour que le tampon (1) serre de manière étanche chacune des branches (11).

6. Dispositif selon la revendication 1 pour tampon (1,1") pénétrant dans l'ouverture (5) avec un jeu faible ou nul, caractérisé en ce que le moyen - (16) d'entraînement en rotation permet de faire tourner la seconde branche (12)autour de la première branche (11) jusqu'à son entrée dans un évidement (20) prévu dans la face latérale dudit tampon (1,1").

7. Dispositif selon la revendication 1 pour tampon (1") s'appliquant contre la paroi (6) autour de l'ouverture (5) caractérisé en ce que, après montage, la première branche (11) de chaque élément allongé (10A,10B) est contenue dans un presse-étoupe (24,25,26) prévu sur le tampon (1").

8. Dispositif selon la revendication 1 caractérisé en ce que le moyen d'entraînement ou d'immobilisation en rotation de la première branche (11) a une orientation déterminée en relation avec le plan contenant les deux branches (11, 12) du dispositif.

9. Dispositif selon la revendication 1 caractérisé en ce que la première branche (11) a une longueur permettant de la pousser à travers le tampon (1, 1') vers l'intérieur jusqu'à ce que la deuxième branche (12) puisse être escamotée par rotation dans le prolongement du tampon (1).

0 208 584

Fig. 1
Fig. 2
Fig. 3
Fig. 4
Fig. 5
Fig. 6

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl.4) |
|---|---|---|---|
| A | DE-A-3 147 430 (AGFA-GEVAERT) <br> * Abrégé * | 1 | F 16 B 5/06 <br> F 24 H 9/18 |
| | --- | | |
| A | DE-A-3 219 829 (ROHREN- UND PUMPENWERK R. BAUER) <br> * Abrégé * | 1 | |
| | --- | | |
| A | CH-A- 464 724 (MARINE MOISTURE CONTROL CO.) <br> * Figures * | 1 | |
| | --- | | |
| A | GB-A-1 553 506 (ELTRON LTD.) <br> * Revendications * | 7 | |
| | --- | | |
| A | US-A-2 525 217 (GLITSCH) <br> * En entier * | 1 | DOMAINES TECHNIQUES RECHERCHES (Int. Cl.4) |
| | ----- | | F 24 H <br> F 16 B <br> B 65 D |

Le present rapport de recherche a été établi pour toutes les revendications

| Lieu de la recherche <br> LA HAYE | Date d'achèvement de la recherche <br> 19-09-1986 | Examinateur <br> VAN GESTEL H.M. |
|---|---|---|